# EUROPEAN PATENT SPECIFICATION

(11) **EP 1 859 651 B1**
(45) Date of publication and mention of the grant of the patent: **01.09.2010**
(21) Application number: 06711321.7
(22) Date of filing: 15.03.2006
(51) Int. Cl.: H05B 3/56, H05B 3/18, H05B 3/34

(54) **GROUNDED CRYSTALLINE HEATING RIBBON**
GEERDETES KRISTALLINES HEIZBAND
RUBAN CRISTALLIN CHAUFFANT RELIE A LA TERRE

(30) Priority: 15.03.2005 US 661512 P
(43) Date of publication of application: 28.11.2007
(73) Proprietor: I.D.L. Heaters Thermal Products Ltd., 30065 Kibbutz Yagur (IL)
(72) Inventor: HORACIO PRYLUK, Ruben, 71700 Modi'in (IL)
(74) Representative: Schmidt, Josef Heinrich
(86) International application number: PCT/IL2006/000339
(87) International publication number: WO 2006/097930

(56) References cited:
- DE-A1- 10 215 205
- FR-A- 1 207 089
- FR-A- 2 495 875
- US-A- 3 293 405
- US-A- 4 119 836
- US-A1- 2004 195 234
- US-B1- 6 353 707

## Description

### Field of the Invention

The present invention relates to crystalline heating ribbons and to method of production thereof. More particularly, the invention relates to a grounded crystalline heating ribbon for indoor and outdoor use, to a method for its production, and for its use in heating, drying, and deicing.

### Background of the Invention

The heating ribbon mat made of amorphous metal which is currently in use for heating purposes, needs an external ground to meet the electricity safety regulations in each country. Moreover, the amorphous metal used in such ribbons is a hard and brittle material and for thicknesses above 28 microns the amorphous metal starts to crystallize. The crystallization of the amorphous metal results in the formation of holes in the metal layer of the heating ribbon which results in a brittle ribbon having a non-uniform electrical resistance. Therefore amorphous ribbons can be manufactured with a thickness of up to 28 microns.

This limitation of the amorphous ribbons is a significant drawback in the area of heating. The amorphous ribbons manufactured nowadays are not suitable for providing coverage of wide areas since their surface area is limited due to the aforementioned thickness limitation.

The electric heating device described in US 6,353,707 includes a flexible resistor ribbon, a plurality of sections of electroconductive coating attached to the resistor ribbon at preset intervals, and connector contacts coupled to the resistor ribbon for enabling connection of a power source to the resistor ribbon. The flexible resistor ribbon is attached to a rigid or flexible flat base panel for incorporation into a building as a floor, wall or ceiling panel.

US 2004/175164 describes an electrical heating device comprising an insulating rigid or flexible shell, and a flexible electric heating element including a flat continuous heating resistance ribbon, disposed inside the shell.

WO 03/037037 describes a heating device comprising a flexible heating element containing a thin, high resistance ribbon arranged between layers of fiberglass mat or mesh, forming heating inserts which are incorporated into a plastic profile during a continuous pultrusion process.

FR2495875 describes a heating element comprising an aluminum foil laminated between insulating layers over both sides of a resistance heating element, employed over the entire element area in order to act as a heat diffuser.

US 4,119,836 describes a heating generating element comprising a layer of aluminum foil laminated between insulating layers over the sides of the heating element for providing good heat transfer.

In US 3,293,405 an aluminum foil is adhered over a Nichrome strip in *"heat transfer relationship*" and used as heat radiating means, said aluminum foil is attached to the Nichrome strip by means of an adhesive coating.

The heating ribbons of the prior art do not provide satisfactory solutions to the aforementioned problems. Therefore there is a need for an electrically grounded crystalline heating ribbon that overcomes the above-mentioned problems.

It is therefore an object of the present invention to provide a grounded crystalline heating ribbon and a method for its production.

It is a further object of the present invention to provide a crystalline heating ribbon that is relatively thick and not easily breakable such that it can cover wide areas and can be flipped and twisted without breaking.

### Summary of the Invention

The present invention is generally directed to a heating ribbon which is flexible and bendable, and designed to provide emission of relatively high heat power through substantially large surface areas, wherein said heating ribbon comprises a relatively thin resistive sheet made from a crystalline metal alloy which is coated by one or more layers of insulating jacket for sealing and electrically insulating the resistive sheet contained therein, wherein the jacket enclosing the resistive sheet is preferably, partially or entirely, covered by an electrically conducting foil to which a conducting wire may be attached for providing electrical connection therewith, and wherein the conducting foil is covered by one or more layers of an insulating material.

Preferably the crystalline alloy comprises Chromium, Nickel, and stabilizers, wherein said stabilizers may be, but are not limited to, Aluminum, Manganese or Silicon, or combinations thereof. Most preferably, the crystalline alloy comprises 19.9% Chromium, 5.1% Manganese, 3.0% Aluminum, 1.1% Silicon, and 70.9% Nickel. Preferably, the electrically conducting foil is an Aluminum foil.

The present invention is also directed to a heating element comprising a flexible and foldable heating ribbon having a substantially large surface area (for example having width of about 30mm), wherein said heating element comprises a substrate on which said heating ribbon is mounted, preferably by bending portions thereof into a flat zigzagged form. The heating ribbon may be attached to the substrate by a type of adhesive tape. Conveniently, conducting wires are electrically connected at each end of the heating ribbon to the resistive sheet contained therein for connecting it to a power source. The conductive foil of the heating ribbon may be connected to the electrical ground of the electricity network.

The present invention is also directed to a method for producing a flexible and bendable heating ribbon, comprising extruding a thin elongated resistive sheet from a crystalline metallic alloy, coating the elongated resistive sheet by an insulating jacket, covering, partially or entirely, the coated elongated resistive sheet with a conductive foil, to which a conducting wire may be electrically attached, and enclosing the coated resistive sheet and the conductive foil covering it within one or more insulating layers.

### Brief Description of the Drawings

The present invention is illustrated by way of example in the accompanying drawings, in which similar references consistently indicate similar elements and in which:
- Fig. 1 is a cross-sectional view of the heating ribbon of the invention; and
- Fig. 2 illustrates a heating element arrangement of the invention.

### Detailed Description of Preferred Embodiments

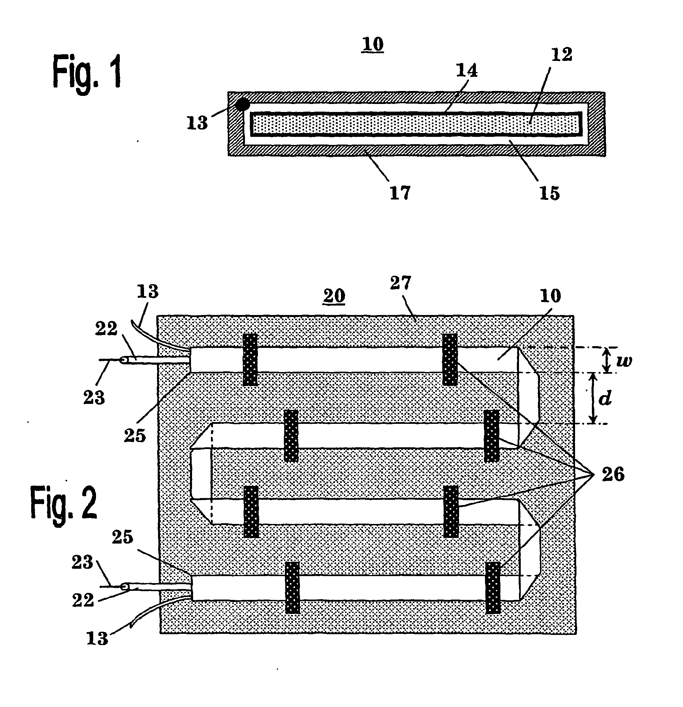

The present invention provides a heating ribbon and heating elements comprising a resistive sheet (12 in Fig. 1) made of a Nickel-Chromium based alloy having high electrical resistivity (e.g., 1.1-4.2 ohm/meter). The heating ribbon of the invention is preferably coated with double or triple polyethylene insulation layers (jacket **14**) applied by a co-extrusion process.

A cross sectional view of the heating ribbon **10** of the invention is shown in Fig. 1. Heating ribbon **10** comprises a resistive sheet **12** which is used as the heating element of heating ribbon **10.** Resistive sheet **12** is preferably coated with jacket **14** for electrically insulating it. Jacket **14** may be covered by an electrical conductive foil **15** to which a conductive wire **13** may be electrically connected for providing the required external grounding contact. This arrangement may be coated with an insulating layer **17** enclosing the above mentioned resistive sheet **12** and its jacket **14,** the conducting foil **15** and wire **13.**

Resistive sheet **12** may be manufactured by a co-extrusion process from a crystalline metallic alloy having suitable electrical conductivity. The thickness of the extruded resistive sheet **12** is generally in the range of 10 microns (micro-meter) to 50 microns, preferably about 30 microns, and its (cross-sectional) width is generally in the range of 7 to 45 mm, preferably about 25 mm. The length of resistive sheet **12** may vary depending on the requirements of each specific application. For example, in under floor heating the length of the heating ribbon may generally be in the range of 60 to 80 meter, preferably about 62 meter.

The crystalline metallic alloy used in the manufacturing of resistive sheet **12** may be made from any suitable compound or alloy having high electrical resistivity. Preferably said crystalline metallic alloy is composed of Chromium, Nickel, and stabilizers, and may have a conductivity of about 1.37 ohm-cm². For example, the crystalline metallic alloy may be manufactured using 17-22% Chromium, 70-75% Nickel, and small amounts of stabilizers.

Various stabilizers may be used in the preparation of said crystalline metallic alloy, however, Aluminum, Manganese and Silicon, are preferable due to the improved flexibility and strength of the metallic ribbon provided therewith. The weight percentage concentration in the alloy of said stabilizers may generally be in the range of 2.5-3.5% Aluminum, 4-6% Manganese, and 0.9-1.5% Silicon. For example, said crystalline metallic alloy may be comprised of 19.9% Chromium, 5.1% Manganese, 3.0% Aluminum, 1.1% Silicon, and 70.9% Nickel.

The jacket **14** of the resistive sheet 12 is preferably applied according to the Teldor specification "719HTNN doubled coating for crystalline metallic ribbons". Jacket **14** may be comprised of polyethylene, preferably, it is made of PO having thickness of about 0.25mm, such as used for jacketing of power and communication cables. The jacket **14** preferably has the following characteristics:
* High melting temperature (approximately 120°C):
* Low coefficient of friction (satisfying UL 1581/1040 standard UL 1581/460);
* satisfying the UL 1581/593 cold impact requirements;
* satisfying the flame resistant UL 94HB standard;
* Low water absorption (satisfying UL 1581/1040 standard);
* Contains a well-dispersed, highly effective UV-stabilizer in sufficient amount to ensure excellent weathering resistance.

The extrusion window used for applying jacket **14** is preferably a relatively wide processing window (e.g., 27x555 microns), allowing the coating material to flow and cover resistive sheet **12** with a constant thickness and at a rate of about 40 to 60 meter/minute.

The thickness of jacket **14** may generally be a in the range of 400 to 600 microns, preferably about 500 microns, and it is preferably arranged such that it surrounds the resistive sheet **12.** Jacket **14** may comprise an additional coating layer, applied in a similar manner to the first layer, the thickness of which may generally be in the range of 400 to 600 microns, preferably 400 microns.

Conducting foil **15** may be manufactured from a flexible and electrically conducting material, preferably from Aluminum. Most preferably, conducting foil **15** is a polyester Aluminum foil tape wrap providing 100% coverage laid in a close contact with a 7×0.16mm, 26awg, TC-drain-wire. The geometrical dimensions of the conducting foil **15** and of the conductive wire **13** are preferably calculated according to the thickness and width of the resistive sheet **12,** in order to assure that the maximal allowed current conditions according to the safety regulations for the ground requirements are satisfied. More particularly, the thickness of conductive wire **13** should be at least 1.15 times thicker than the total thickness of the conducting foil **15.**

Accordingly, the general thickness of the double layered jacket **14** may be in the range of 1000 to 1400 microns (including the aluminum metal).

After completing the coating process (extruded polyethylene layers **14)** the conducting foil **15** is added to the heating ribbon **10** via a co-extrusion process which preserves the flexibility of the ribbon **10.** The coated ribbon is covered by the conducting foil 15, and conducting wire **13** is electrically attached to it, which are then coated with the final insulation (polyethylene) layer **17** that is preferably also applied by an extrusion process.

The conductive wire **13** is preferably a threaded wire made of copper, or other conducting material having suitable flexibility. For example, conductive wire **13** may be a 7×0.16mm or 25×0.16mm wire. Conductive wire **13** is preferably located at one of the lateral sides of the heating ribbon **10,** in electrical connection with the conducting foil **15** and it is drawn along the entire length of the heating ribbon **10.**

A general structure of a heating element **20** of the invention is shown in Fig. 2. Heating element **20** comprises a heating ribbon **10** folded and mounted onto substrate **27.** Substrate **27** may be manufactured from a flexible and electrically insulating material, preferably from fiberglass. For example, substrate **27** may be prepared from a fiberglass net having a nominal specific density of about 120 grams per 1 square meter, and having a nominal hole size of about 10×10 mm. Substrate **27** also serves as a shaper used to establish the structure desired for heating element **20**.

Heating element **20** may be configured in a variety of ways according to the desired heating power. Heating ribbon **10** is preferably placed on the surface of the substrate **27** in a manner that leaves a rim of about 2-3 cm from each side of substrate **27.**

The density of the heating element **20** is defined by the ratio between the area of the substrate **27** in which the heating ribbon **10** resides and the total area of the substrate **27.** For example, in under floor heating applications, a ribbon density of 50% means that 50% of the floor area is covered by the heating ribbon **10.** It should be noted that such coverage is not possible with the conventional heating cables such as used in these applications since the heating cable has a circular cross-sectional area, and since the heating produced by the heating ribbon **10** of the present invention is evenly emitted from the surface of the ribbon. While the allowed nominal ribbon density range is between 27% to 50%, heating element **20** may be designed to provide a nominal ribbon density of 30%.

The length of substrate **27** may generally be in the range of 2 to 12 meter, and its width may be about 50mm. The length of heating ribbon **10** mounted on substrate **27** is generally in the range of 50 to 90 meter, preferably about 65 meter. Of course, heating element **20** may be manufactured and supplied without the substrate **27.**

Heating element **20** may be connected electrically to a power source via wires **23.** The connectors connecting wires **23** to the resistive sheet **12** are preferably a tin coated thin iron based connectors with contacts pressed and attached to the resistive sheet **12** at each end **25** of heating ribbon **10.** Wires **23** may be copper based twisted electrical wires having a diameter of about 2 mm. Most preferably, wires **23** are of a type that meets IEC228 class 5 requirements, and having a double layered insulation made of PVC (having 105°c heat durability). The nominal diameter of each wire **23** is preferably about 3.3 mm, and generally, their diameters will not exceed 3.4 mm. Wires **23** preferably meet UL1015 requirements, and they generally have a length of about at least 3 meters.

A shrinking sleeve **22** encloses and seals each of the wires **23,** in particular the connection between the resistive sheet **12** and the "cold" electrical wires **23** (i.e., serving as electrical contacts between the power source and the heating ribbon **10** but which do not transfer Heat). The sleeve **22** preferably has a shrinking ratio of 1 to 4, e.g., ATUM series, and temperature stability in the range of -55°c to 110°c. The shrinking sleeve **22** preferably meets the MIL-DTL-23053/4, class 3 (military standard specification approval for safety water immersion resistance), and Raychem specification RK-6025.

Adhesive tape **26** is used to affix heating ribbon **10** to the carrying substrate **27** and thus it simplifies the installation of heating ribbon **10.** Adhesive tape **26** is preferably a Polypropylene adhesive tape, such as defined by Israeli standard 791, with the following characteristics:

| | |
|---|---|
| Width: | 47 microns |
| Tensile strength: | 100N to 25 mm. |
| Lengthening: | 130% |
| Adhesive strength: | 12N to 25mm. |
| Storage life: | 1 year. |
| Polypropylene sheet temperature limit: | 120°c. |

The outputted power of each heating element **20** is preferably rated according to the CEI IEC 60335-1 international standard for heating appliances, paragraph 10.

As a consequence the measured resistance tolerance is the reciprocal of the power deviation. It should be noted that the nominal rated power can also vary from the 100, 120, 150, 200, 300, 400, 500 watt values according to the geometrical dimensions of the heating element **20** and the length of the heating ribbon **10** that is placed on substrate **27.**

### EXAMPLE:

For a heating element **20** of about 2.25 sqm (e.g., 450×50 cm) a heating ribbon **10** of about 10 cm wide **(w)** and 50 micron thickness may be used. In such embodiment a heating ribbon **10** of about 150 watt/sqm is obtained for an operating voltage of 230 volts, such that the total power of the heating element **20** is about 337.5 watts for a heating ribbon **10** with a total length of approximately 58.4 meters. The distance (d) between the portions of the flipped ribbon are preferably about 3.8 cm. The conducting foil **15** that cover the resistive sheet **12** is preferably of about 12 micron thickness and the diameter of the conductive wire **13** is preferably about 0.50 mm and its resistance is approximately 0.33 ohm/meter. In this preferred embodiment the total resistance of the ribbon is about 2.8 ohm/meter and the density of heating element 20 is about 32%.

All of the abovementioned parameters are given by way of example only, and may be changed in accordance with the differing requirements of the various embodiments of the present invention. Thus, the abovementioned parameters should not be construed as limiting the scope of the present invention in any way. In addition, it is to be appreciated that the different sheets, foils, coating, and other members, described hereinabove may be constructed in different shapes (e.g., having oval, square etc. form in plan view) and sizes differing from those exemplified in the preceding description.

The above example and description have of course been provided only for the purpose of illustration, and are not intended to limit the invention in any way. As will be appreciated by the skilled person, the invention can be carried out in a great variety of ways, employing more than one technique from those described above, all without exceeding the scope of the invention.

## Claims

1. A heating ribbon (10) comprising a thin elongated electrically resistive sheet (12) made from a crystalline metal alloy surrounded by at least two electrically insulating layers (14, 17), **characterized in that** said heating ribbon (10) further comprises internal ground means in the form of an electrically conducting foil (15) which is interposed between said insulating layers (14, 17), and a conducting wire (13) attached to said conducting foil (15) and capable of providing electrical connection thereto, wherein said conducting wire (13) is drawn along the length of said heating ribbon (10) and enclosed within one of its insulating layers (17).

2. The heating ribbon (10) according to claim 1, wherein the crystalline alloy comprises Chromium, Nickel, and one or more stabilizers.

3. The heating ribbon (10) according to claim 2, wherein the one or more stabilizers are selected from the group consisting of Aluminum, Manganese and Silicon.

4. The heating ribbon (10) according to claim 2, wherein the crystalline alloy comprises 70-75% Nickel, 17-22% Chromium, 2.5- 3.5% Aluminum, 4- 6% Manganese, and 0. 9- 1.5% Silicon,

5. The heating ribbon (10) according to claim 3, wherein the crystalline alloy comprises 19.9% Chromium, 5.1% Manganese, 3.0% Aluminum, 1.1% Silicon, and 70.9% Nickel.

6. The heating ribbon (10) according to claim 1, wherein the electrically conducting foil (15) is an Aluminum foil.

7. A heating element (20) comprising a flexible and foldable heating ribbon (10) mounted on a substrate (27) by bending portions thereof into a flat zigzagged form, said heating ribbon (10) comprises a relatively thin elongated resistive sheet (12) made from a crystalline metal alloy and surrounded by at least two electrically insulating layers (14, 17), **characterized in that** said heating ribbon (10) further comprises: an electrically conducting foil (15), partially or entirely, covering said resistive sheet (12) such that said at least two electrically insulating layers(14, 17) isolates between said elongated resistive sheet (12) and said conducting foil (15); and a conducting wire (13) attached to said conducting foil (15) and capable of providing electrical connection thereto, wherein said conducting wire (13) is drawn along the length of said heating ribbon (10) and enclosed within one of its insulating layers (17).

8. The heating element (20) according to claim 7, wherein the heating ribbon (10) is attached to the substrate (27) by an adhesive tape (26).

9. The heating element (20) according to claim 7, wherein conducting wires (23) are electrically connected at each end (25) of the heating ribbon (10) to the elongated resistive sheet (12) contained therein.

10. The heating element (20) according to claim 7, wherein the crystalline alloy comprises Chromium, Nickel, and one or more stabilizers.

11. The heating element (20) according to claim 10, wherein the one or more stabilizers are selected from the group consisting of Aluminum, Manganese and Silicon.

12. The heating element (20) according to claim 11, wherein the crystalline alloy comprises 70-75% Nickel, 17- 22% Chromium, 2.5- 3.5% Aluminum, 4- 6% Manganese, and 0.9- 1.5% Silicon.

13. The heating element (20) according to claim 11, wherein the crystalline alloy comprises 19.9% Chromium, 5.1% Manganese, 3.0% Aluminum, 1.1% Silicon, and 70.9% Nickel.

14. A method for producing a heating ribbon (10), **characterized in that** said heating ribbon is flexible and bendable, and comprises a grounding means and a conducting wire attached to said grounding means and passing along the length of said heating ribbon, said method comprising extruding a relatively thin elongated resistive sheet (12) from a crystalline metallic alloy, coating said elongated resistive sheet by one or more layers of insulating jacket (14), partially or entirely covering the coated elongated resistive sheet (12, 14) with a conductive foil (15), attaching to said conductive foil (15) a conducting wire (13) along its length, and enclosing said coated resistive sheet (12, 14), said conductive foil (15), and said conducting wire (13) with an insulating layer (17).

15. A method according to claim 14, wherein the crystalline alloy comprises Chromium, Nickel, and one or more stabilizers.

16. A method according to claim 15, wherein the one or more stabilizers are selected from the group consisting of Aluminum, Manganese and Silicon.

17. A method according to claim 16, wherein the crystalline alloy comprises 70- 75% Nickel, 17- 22% Chromium, 2.5-3.5% Aluminum, 4- 6% Manganese, and 0.9-1.5% Silicon.

18. A method according to claim 16, wherein the crystalline alloy comprises 19.9% Chromium, 5.1% Manganese, 3.0% Aluminum, 1.1% Silicon, and 70.9% Nickel.

## Patentansprüche

1. Heizband (10), aufweisend eine aus einer kristallinen Metalllegierung hergestellte, dünne längliche Schicht (12) elektrischen Widerstands, die von mindestens zwei elektrisch isolierenden Schichten (14, 17) umgeben ist, **dadurch gekennzeichnet, dass** das Heizband (10) außerdem interne Erdungseinrichtungen in Form einer zwischen den isolierenden Schichten (14, 17) angeordneten, elektrisch leitenden Folie (15) und einen Leitungsdraht (13) aufweist, der an der leitenden Folie (15) angebracht ist und eine elektrische Verbindung zu dieser bereitstellen kann, wobei sich der Leitungsdraht (13) entlang der Länge des Heizbands (10) erstreckt und innerhalb einer der isolierenden Schichten (17) eingeschlossen ist.

2. Heizband (10) nach Anspruch 1, wobei die kristalline Legierung Chrom, Nickel und einen oder mehrere Stabilisatoren aufweist.

3. Heizband (10) nach Anspruch 2, wobei der eine oder die mehreren Stabilisatoren aus der folgenden Gruppe ausgewählt sind: Aluminium, Mangan und Silizium.

4. Heizband (10) nach Anspruch 2, wobei die kristalline Legierung 70-75% Nickel, 17-22% Chrom, 2,5-3,5% Aluminium, 4-6% Mangan und 0,9-1,5% Silizium aufweist.

5. Heizband (10) nach Anspruch 3, wobei die kristalline Legierung 19,9% Chrom, 5,1% Mangan, 3,0% Aluminium, 1,1% Silizium und 70,9% Nickel aufweist.

6. Heizband (10) nach Anspruch 1, wobei die elektrisch leitende Folie (15) eine Aluminiumfolie ist.

7. Heizelement (20), aufweisend ein flexibles und faltbares Heizband (10), das durch Biegen von Abschnitten in eine flache Zickzackform an einem Substrat (27) angebracht ist, wobei das Heizband (10) eine relativ dünne längliche Widerstandsschicht (12) aufweist, die aus einer kristallinen Metalllegierung hergestellt ist und von mindestens zwei elektrisch isolierenden Schichten (14,17) umgeben ist, **dadurch gekennzeichnet, dass** das Heizband (10) außerdem aufweist: eine elektrisch leitende Folie (15), die die Widerstandsschicht (12) teilweise oder vollständig bedeckt, so dass die mindestens zwei elektrisch isolierenden Schichten (14,17) eine Isolation zwischen der länglichen Widerstandsschicht (12) und der leitenden Folie (15) bilden; und einen Leitungsdraht (13), der an der leitenden Folie (15) angebracht ist und eine elektrische Verbindung zu dieser bereitstellen kann, wobei sich der Leitungsdraht (13) entlang der Länge des Heizbands (10) erstreckt und innerhalb einer der isolierenden Schichten (17) eingeschlossen ist.

8. Heizelement (20) nach Anspruch 7, wobei das Heizband (10) mittels eines Klebbands (26) an dem Substrat (27) angebracht ist.

9. Heizelement (20) nach Anspruch 7, wobei an jedem Ende (25) des Heizbands (10) Leitungsdrähte (23) mit der darin enthaltenen länglichen Widerstandsschicht (12) elektrisch verbunden sind.

10. Heizelement (20) nach Anspruch 7, wobei die kristalline Legierung Chrom, Nickel und einen oder mehrere Stabilisatoren aufweist.

11. Heizelement (20) nach Anspruch 10, wobei der eine oder die mehreren Stabilisatoren aus der folgenden Gruppe ausgewählt sind: Aluminium, Mangan und Silizium.

12. Heizelement (20) nach Anspruch 11, wobei die kristalline Legierung 70-75% Nickel, 17-22% Chrom, 2,5-3,5% Aluminium, 4-6% Mangan und 0,9-1,5% Silizium aufweist.

13. Heizelement (20) nach Anspruch 11, wobei die kristalline Legierung 19,9% Chrom, 5,1% Mangan, 3,0% Aluminium, 1,1% Silizium und 70,9% Nickel aufweist.

14. Verfahren zur Herstellung eines Heizbands (10), **dadurch gekennzeichnet, dass** das Heizband flexibel und biegbar ist und eine Erdungseinrichtung und einen Leitungsdraht aufweist, der an der Erdungseinrichtung angebracht ist und sich entlang der Länge des Heizbands erstreckt, wobei das Verfahren aufweist: Extrudieren einer relativ dünnen länglichen Widerstandsschicht (12) aus einer kristallinen metallischen Legierung, Beschichten der länglichen Widerstandsschicht mit einer oder mehreren Schichten eines isolierenden Mantels (14), teilweises oder vollständiges Bedecken der beschichteten länglichen Widerstandsschicht (12,14) mit einer leitfähigen Folie (15), Anbringen eines Leitungsdrahts (13) an der leitfähigen Folie (15) entlang deren Länge und Umhüllen der beschichteten Widerstandsschicht (12,14), der leitfähigen Folie (15) und des Leitungsdrahts (13) mit einer isolierenden Schicht (17).

15. Verfahren nach Anspruch 14, wobei die kristalline Legierung Chrom, Nickel und einen oder mehrere Stabilisatoren aufweist.

16. Verfahren nach Anspruch 15, wobei der eine oder die mehreren Stabilisatoren aus der folgenden Gruppe ausgewählt sind: Aluminium, Mangan und Silizium.

17. Verfahren nach Anspruch 16, wobei die kristalline Legierung 70-75% Nickel, 17-22% Chrom, 2,5-3,5% Aluminium, 4-6% Mangan und 0,9-1,5% Silizium aufweist.

18. Verfahren nach Anspruch 16, wobei die kristalline Legierung 19,9% Chrom, 5,1% Mangan, 3,0% Aluminium, 1,1% Silizium und 70,9% Nickel aufweist.

## Revendications

1. Ruban chauffant (10) comprenant une feuille mince allongée électriquement résistante (12) formée d'un alliage de métal cristallin entouré d'au moins deux couches électriquement isolantes (14, 17), **caractérisé en ce que** ledit ruban chauffant (10) comprend en outre un moyen interne de mise à la terre sous la forme d'un film conducteur de l'électricité (15) qui est intercalé entre lesdites couches isolantes (14, 17), et un fil métallique conducteur (13) fixé audit film conducteur (15) et capable de lui fournir une connexion électrique, dans lequel ledit fil métallique conducteur (13) est tiré sur la longueur dudit ruban chauffant (10) et enserré dans une de ses couches isolantes (17).

2. Ruban chauffant (10) selon la revendication 1, dans lequel l'alliage cristallin comprend du chrome, du nickel et un ou plusieurs stabilisateurs.

3. Ruban chauffant (10) selon la revendication 2, dans lequel le ou les stabilisateurs est ou sont sélectionnés dans le groupe constitué de l'aluminium, du manganèse et du silicium.

4. Ruban chauffant (10) selon la revendication 2, dans lequel l'alliage cristallin comprend 70 à 75 % de nickel, 17 à 22 % de chrome, 2,5 à 3,5 % d'aluminium, 4 à 6 % de manganèse et 0,9 à 1,5 % de silicium.

5. Ruban chauffant (10) selon la revendication 3, dans lequel l'alliage cristallin comprend 19,9 % de chrome, 5,1 % de manganèse, 3,0 % d'aluminium, 1,1 % de siliciumet 70,9 % de nickel.

6. Ruban chauffant (10) selon la revendication 1, dans lequel le film conducteur de l'électricité (15) est un film d'aluminium.

7. Elément chauffant (20) comprenant un ruban chauffant flexible et pliable (10) monté sur un substrat (27) en repliant des portions de celui-ci en zigzag plat, ledit ruban chauffant (10) comprenant une feuille résistante allongée relativement mince (12) formée d'un alliage de métal cristallin et entourée d'au moins deux couches électriquement isolantes (14, 17), **caractérisé en ce que** ledit ruban chauffant (10) comprend en outre : un film conducteur de l'électricité (15) couvrant partiellement ou entièrement ladite feuille résistante (12) de sorte que lesdites au moins deux couches électriquement isolantes (14, 17) isolent entre ladite feuille résistante allongée (12) et ledit film conducteur (15) ; et un fil métallique conducteur (13) fixé audit film conducteur (15) et capable de lui fournir une connexion électrique, dans lequel ledit fil métallique conducteur (13) est tiré sur la longueur dudit ruban chauffant (10) et enserré dans une de ses couches isolantes (17).

8. Elément chauffant (20) selon la revendication 7, dans lequel le ruban chauffant (10) est fixé au substrat (27) par une bande adhésive (26).

9. Elément chauffant (20) selon la revendication 7, dans lequel des fils métalliques conducteurs (23) sont connectés électriquement, à chaque extrémité (25) du ruban chauffant (10), à la feuille résistante allongée (12) qui y est contenue.

10. Elément chauffant (20) selon la revendication 7, dans lequel l'alliage cristallin comprend du chrome, du nickel et un ou plusieurs stabilisateurs.

11. Elément chauffant (20) selon la revendication 10, dans lequel le ou les stabilisateurs est ou sont sélectionnés dans le groupe constitué de l'aluminium, du manganèse et du silicium.

12. Elément chauffant (20) selon la revendication 11, dans lequel l'alliage cristallin comprend 70 à 75 % de nickel, 17 à 22 % de chrome, 2,5 à 3,5 % d'aluminium, 4 à 6 % de manganèse et 0,9 à 1,5 % de silicium.

13. Elément chauffant (20) selon la revendication 11, dans lequel l'alliage cristallin comprend 19,9 % de chrome, 5,1 % de manganèse, 3,0 % d'aluminium, 1,1 % de silicium et 70,9 % de nickel.

14. Procédé pour produire un ruban chauffant (10), **caractérisé en ce que** ledit ruban chauffant est flexible et pliable, et comprend un moyen de mise à la terre et un fil métallique conducteur fixé audit moyen de mise à la terre et passant sur la longueur dudit ruban chauffant, ledit procédé comprenant les étapes consistant à extruder une feuille résistante, allongée, relativement mince (12) à partir d'un alliage métallique cristallin, revêtir ladite feuille résistante allongée d'une ou plusieurs couches de gaine isolante (14), recouvrir partiellement ou entièrement la feuille résistante allongée revêtue (12, 14) d'un film conducteur (15), fixer audit film conducteur (15) un fil métallique conducteur (13) sur sa longueur, et enserrer ladite feuille résistante revêtue (12, 14), ledit film conducteur (15) et ledit fil métallique conducteur (13) d'une couche isolante (17).

15. Procédé selon la revendication 14, dans lequel l'alliage cristallin comprend du chrome, du nickel et un ou plusieurs stabilisateurs.

16. Procédé selon la revendication 15, dans lequel le ou les stabilisateurs est ou sont sélectionnés dans le groupe constitué de l'aluminium, du manganèse et du silicium.

17. Procédé selon la revendication 16, dans lequel l'alliage cristallin comprend : 70 à 75 % de nickel, 17 à 22 % de chrome, 2,5 à 3,5 % d'aluminium, 4 à 6 % de manganèse et 0,9 à 1,5 % de silicium.

18. Procédé selon la revendication 16, dans lequel l'alliage cristallin comprend 19,9 % de chrome, 5,1 % de manganèse, 3,0 % d'aluminium, 1,1 % de silicium et 70,9 % de nickel.
